# EUROPÄISCHE PATENTANMELDUNG

(11) **EP 1 462 286 A2**
(43) Veröffentlichungstag der Anmeldung: **29.09.2004**
(21) Anmeldenummer: 04007426.2
(22) Anmeldetag: 26.03.2004
(51) Int. Cl.: B60J 5/06, B60J 7/06

(54) **Aufbau für einen Lastkraftwagen oder einen Anhänger für Lastkraftwagen**

(30) Priorität: 28.03.2003 DE 10314378
(71) Anmelder: Andersen, Monika, 75173 Pforzheim (DE)
(72) Erfinder: Andersen, Monika, 75173 Pforzheim (DE)
(74) Vertreter: Leitner, Waldemar, Dr. techn.

(57) **Zusammenfassung**

Die Erfindung betrifft einen kastenförmigen, geschlossenen Aufbau (2) für einen Lastkraftwagen oder einen Anhänger für Lastkraftwagen, insbesondere für einen Trailer, umfassend einen Boden (8), eine linke und eine rechte Seitenwand (1), ein Dach (7), eine Vorderwand (3) und eine Rückwand (4), die vorzugsweise wärmeisoliert sind, wobei mindestens eine Seitenwand (1) in Längsrichtung des Aufbaus (2) verschiebbare, zusammenfaltbare Türen (9) aufweist, mit denen die Seitenwand (1) öffenbar ist, die mindestens eine, mit öffenbaren Türen (9) versehene Seitenwand (1) mindestens eine verschiebbare Runge (5) aufweist, mit der das Dach (7) gegenüber dem Boden (8) abgestützt ist, und die Türen (9) und die Runge (5) in einer Dachprofilschiene (6) in Längsrichtung des Aufbaus (2) verschiebbar verankert sind.

Erfindungsgemäß ist vorgesehen, daß die Türen zwischen der Vorderwand (3) und der hierzu nächstliegenden Runge (5) und die Türen (9) zwischen der Rückwand (4) und der hierzu nächstliegenden Runge (5) und die Türen (9) zwischen benachbarten Rungen (5) aufeinander faltbar miteinander verbunden sind, so daß die Seitenwand (1) von der Vorderwand (3) bis zur Rückwand (4) vollständig oder abschnittsweise öffenbar ist.

Des Weiteren sieht die Erfindung vor, daß das Dach (7) in Längsrichtung aufeinanderfolgende Dachelemente (43) aufweist, die in Längsrichtung des Aufbaus (2) gegeneinander faltbar sind und/oder in einer in Längsrichtung verlaufenden Dachprofilschiene (6) verschiebbar geführt sind, und daß das Dach (7) durch Verschieben von Dachelementen (43) von der Rückwand (4) zur Vorderwand (3) und/oder von der Vorderwand (3) zur Rückwand (4) öffenbar ist.

## Beschreibung

Die Erfindung betrifft einen kastenförmigen, geschlossenen Aufbau für einen Lastkraftwagen oder einen Anhänger für Lastkraftwagen, insbesondere für einen Trailer, umfassend einen Boden, eine linke und eine rechte Seitenwand, ein Dach, eine Vorderwand und eine Rückwand, die vorzugsweise wärmeisoliert sind, wobei mindestens eine Seitenwand in Längsrichtung des Aufbaus verschiebbare, zusammenfaltbare Türen aufweist, mit denen die Seitenwand öffenbar ist, die mindestens eine, mit öffenbaren Türen versehene Seitenwand mindestens eine verschiebbare Runge aufweist, mit der das Dach gegenüber dem Boden abgestützt ist, und die Türen und die Runge in einer Dachprofilschiene in Längsrichtung des Aufbaus verschiebbar verankert sind

Ein derartiger Aufbau ist aus der FR 2 808 762 bekannt. Der in dieser Druckschrift beschriebene Aufbau weist ein Dachprofil auf, in dem in einer ersten Schiene Rungen und in einer zweiten Schiene eine gardinenartige Abdeckung geführt sind. Durch ein solches Verschieben der Rungen und/oder der Abdekkung lässt sich die Seitenwand des bekannten Aufbaus öffnen. In nachhaltiger Art und Weise ist aber eine abschnittsweise Öffnung der Seitenwand nicht möglich, da die gardinenartige Abdeckung einteilig ausgeführt ist.

Nach dem Stand der Technik gibt es zwei Grundtypen von Aufbauten für den allgemeinen Gütertransport mit Lastkraftwagen, nämlich den festen Koffer- oder Kastenaufbau, mit oder ohne Kühlung durch ein Kühlaggregat, und den Aufbau mit Planenabdeckung, ohne Kühlung.

Kastenförmige geschlossene Kofferaufbauten für einen Lastkraftwagen oder einen Anhänger für Lastkraftwagen sind in der Regel, insbesondere dann, wenn es sich um Kühlwagen handelt, nur mit Türen an der Rückwand versehen und können deshalb nur von der Rückseite be- und entladen werden. Seitliches Be- und Entladen über die Dachseite sind daher ausgeschlossen. Sie sind deshalb zum Transport von Ladegut, das seitlich oder von oben be- bzw. entladen werden muß, ungeeignet. Häufig wäre ein Be- und Entladen von der Seite oder von oben zwar nicht erforderlich, aber zeitsparender. Es existieren daher geschlossene Aufbauten, die über einzelne, kleine Türen an der Seite verfügen, durch die aber kein großvolumiges Ladegut be- oder entladen werden kann.

Ein kastenförmiger geschlossener Kofferaufbau hat den Vorteil, daß er einen relativ guten Hygieneschutz gegen das Eindringen von Schmutz und Feuchtigkeit bietet und in der Ausführung mit einem Kühlaggregat zur Kühlung des Innenraums gut gegen Temperatureiflüsse und Temperaturschwankungen isoliert werden kann. Die Wärmeisolation wird durch Isolierplatten erzielt, deren Stärke nach dem Isolationsbedarf bemessen wird. Ein kastenförmiger geschlossener Aufbau hat ferner den Vorteil, daß er komplett verschließbar ist, beispielsweise für den Transport wertvoller Güter.

Ein Kofferaufbau hat jedoch auch eine Vielzahl von Nachteilen So ist das Beund Entladen von großen Gütern unter zur Hilfenahme eines Kranes wegen des festen, geschlossenen Daches nicht möglich. Beim Verladen von sperrigen Gütern, die eine Länge von mehr als 2 Metern aufweisen, werden häufig die Güter oder der Aufbau beschädigt, da beim Verladen durch die Tür in der Rückwand das sperrige Gut an der Innenwand des Aufbaues schrammen kann.

Ferner hat ein Kofferaufbau in der wärmeisolierenden Ausführung ein sehr erhebliches Eigengewicht aufgrund des schweren Isolationsmaterials. Bei gekühlten Aufbauten, die mehrere Temperaturzonen aufweisen, z. B. zwischen der Vorwand und einer Trennisolationswand eine Tiefkühlzone und zwischen der Trennisolationswand und der Rückwand einer Kühl- oder Raumtemperaturzone, ist es zwar möglich, durch in einer Seitenwand angebrachte Tür die benötigte Ware zu beladen oder zu entladen. Allerdings muß sich die Ware dann genau an der Tür befinden, da in dem Aufbau nicht rangiert werden kann, und darf keine zu großen Abmessungen aufweisen, damit sie durch die relativ kleinen, in der Seitenwand angebrachten Türen paßt.

Es ist ein kastenförmiger geschlossener Kofferaufbau bekannt, bei dem eine Seitenwand komplett geöffnet werden kann. Dabei werden die in der Seitenwand angebrachten Türen in der Mitte des Aufbaus entriegelt und entlang einer Laufschiene am Dach verschoben, und zwar die vorderen Türen zur Vorwand hin und die hinteren Türen zur Rückwand hin. Dadurch ist die gesamte Ladefläche zwischen Vorder- und Rückwand geöffnet und von der Seite her frei zugänglich.

Nachteilig bei diesem bekannten Aufbau ist jedoch, daß er im Bereich der öffenbaren Seitenwand keine statische Trageigenschaft besitzt. Um die kastenförmige Form des Aufbaus zu gewährleisten, sind daher sehr starke Verstärkungen in der Vorderwand, der Rückwand, dem Dach und der nicht öffenbaren Seitenwand erforderlich, so daß das Eigengewicht des Aufbaus sehr hoch ist. Ferner ist es nur möglich, die Türen von der Mitte des Aufbaus aus zu öffnen. Daher ist es in manchen Be- und Entladesituationen erforderlich, daß zum Öffnen der Seitenwand die Ladungssicherung, die auf der Innenseite der Türen angebracht ist, entfernt werden muß. Dadurch ist das Ladepersonal gezwungen, vor dem Öffnen der Türen über die Ladung zu klettern, um die Ladungssicherung zu entfernen. Daraus resultiert eine Verletzungsgefahr für das Ladepersonal und eine Gefahr der Beschädigung der Ladung. Häufig wird daher auf Sichern der Ladung verzichtet. Zudem besitzt ein solcher Aufbau aufgrund der extremen Verstärkung ein sehr hohes Eigengewicht, das höher als bei gewöhnlichen Kühlaufbauten ist.

Desweiteren können derartig vorbekannte kastenförmige geschlossene Aufbauten, bei denen eine Seitenwand je zur Hälfte nach vorne und hinten geöffnet werden kann, nicht mittels eines Kranes von oben beladen werden. Zudem hat sich in der Praxis gezeigt, daß trotz der zusätzlichen Verstärkung aufgrund der mechanischen Belastungen und Erschütterungen sowie der fehlenden tragenden Unterstützung des Daches im Bereich der öffenbaren Seitenwand das Dach im Laufe der Zeit verzieht und nach unten wölbt, so daß der Aufbau undicht wird und die Türen schwergängig werden oder sich verklemmen. In diesen Fällen werden die Aufbauten dann in der Weise umgebaut, daß sie komplett verschlossen und starr verschweißt werden, wonach sie als von der Rückwand aus beladbarer Aufbau oder wärmeisolierter Aufbau weiter verwendet werden können.

Der zweite nach dem Stand der Technik bekannte Aufbautyp ist ein Planenaufbau, der auch als "Gardinenaufbau mit Schiebedach" bezeichnet wird. Er umfaßt ein Dach, das mehrere Querstreben aufweist, die mittels Rollen seitlich in einer Schiene geführt werden, und an der Vorderwand fest verankert ist. Es ist mit einer Plane bzw. Folie belegt, die an der Rückwand in einer massiven Querstrebe eingefaßt ist und am Seitenrahmen manuell verschlossen oder geöffnet werden kann. An den Seitenwänden sind "Gardinen" angebracht. Dabei handelt es sich um Planen, die im Bereich des Daches von Rollen gehalten werden und unten angenähte Spannverschlüsse aufweisen, mit denen sie am unteren Rahmen bzw. Boden zum Verschließen des Aufbaus eingehakt werden. Die Seitenplane ist zusätzlich vorne und hinten von oben nach unten in eine Stange eingearbeitet und wird in einer Vorrichtung vorne und hinten fixiert sowie mit einer Drehvorrichtung gespannt. Eventuelle Türen sind in der Rückwand des Aufbaus angebracht.

Der Aufbau wird mittels von dem Boden zum Dach reichenden Rungen in Form gehalten. Die Rungen können mittels einer Entriegelungsvorrichtung entfernt oder mittels Aufhängungen in einer oberen Schiene bei geöffneter Seitenplane in Längsrichtung des Aufbaus verschoben werden, um Platz für das Be- und Entladen größerer Längen von der Seite her zu ermöglichen.

Bei manchen derartigen Aufbauten weist die Seitenwand am Boden angelegte Klappen auf, an denen die Plane fixiert wird. Nach dem Lösen der Plane werden die Klappen an den Rungen entriegelt und klappen nach unten. Die Plane der Seitenwand oder die gesamte Plane des Aufbaus besteht aus einem einzigen Teil und muß zum Öffnen der Seitenwand oder der Rückwand auf das Dach geworfen werden, um be- oder entladen zu können. Zum Öffnen des Daches wird die Plane an den Seitenwänden und an der Rückwand gelöst und mit erheblicher Kraftanstrengung zur Vorwand hin geschoben und/oder gefaltet. Vor dem Beladen durch das Dach ist es dann noch erforderlich, ein für die Dachplane im Dachbereich angebrachtes Stützgestänge aus Rohren an den seitlichen Rahmenprofilen auszuhängen.

Ein Planenaufbau, der seitlich und/oder von oben geöffnet werden kann, ist allerdings für Kühltransporte oder für den Transport von Gütern, die empfindlich gegenüber Witterungseinflüssen sind, nicht verwendbar, da die Plane keinen ausreichenden Schutz gegenüber Witterung, Temperatur, Feuchtigkeit und Schmutz gewährleistet. Auch eine komplett gespannte und geschlossene Plane ist niemals vollständig dicht. Außerdem tritt bei vielen Planenaufbauten Luft ein, so daß sie sich während der Fahrt durch den Fahrtwind aufbläht und dadurch sowohl der Luftwiderstand des Fahrzeuges zunimmt als auch Feuchtigkeit und Schmutz in den Laderaum eindringen kann.

Zudem dehnt sich die Plane im Laufe der Zeit, so daß ihre Dichtigkeit nachläßt. Die üblichen Planen aus PVC-Folie sind außerdem ungeeignet für den Transport von verderblichen Lebensmitteln und sind nur für bestimmte Lebensmittel zugelassen, wie z. B. einige Arten Zitrusfrüchte.

Es sind auch Aufbauten bekannt, bei denen Vorderwand und Dach aus festem Material und die Seiten sowie eventuell die Rückwand aus Planen bestehen und die mit einem Kühlaggregat versehen sind. Nachteilig bei diesen Aufbauten ist die fehlende Lademöglichkeit durch das Dach und die mangelnde gleichmäßige Temperaturverteilung im Laderaum. Zudem ist ein Tiefkühlen bei diesen Aufbauten nicht möglich. Solche Aufbauten sind für den gekühlten Transport nur weniger Kühlgüter zugelassen, insbesondere lediglich für einige Zitrusfrüchte und Blumen. Aufgrund der sehr schlechten Luftzirkulation wird er aber zumeist nicht hierfür eingesetzt.

Die jeweiligen Nachteile und Einschränkungen der bekannten Aufbauten, Kofferaufbau und Planensystem, und ihre jeweiligen Einschränkungen in Bezug auf das transportierbare Ladegut sowie die einsetzbaren Be- und Entladetechniken führen in der Praxis häufig dazu, daß ein Fahrzeug, das eine Transportfahrt durchführt, im Anschluß daran eine Leerfahrt in Kauf nehmen muß. Dadurch erhöhen sich die Transportkosten erheblich.

Derartige Leerfahrten treten nicht nur lokal auf, sondern aufgrund regionaler, nationaler oder jahreszeitlicher Produktionsunterschiede auch über Strecken von 1000 km und mehr. Beispielsweise werden aus dem Ruhrgebiet überwiegend Stahlgüter verschickt und aus der Pfalz vorwiegend Früchte und Gemüse, die einer Kühlung bedürfen. Finnland und Schweden importieren Früchte und Gemüse, exportieren aber vorwiegend Langholz und Papier. Griechenland importiert sehr viel Fisch, exportiert aber vorwiegend Gebrauchsgüter zurück nach Westeuropa, die keiner Kühlung bedürfen. Diese Gegebenheiten haben zur Folge, daß die nach dem Stand der Technik bekannten Transportfahrzeuge, die wie oben erläutert nur jeweils eingeschränkt verwendbar sind, häufig auf dem Hin- oder Rückweg eine lange Leerfahrt in Kauf nehmen müssen, da in dieser Transportrichtung nicht genügend Güter derjenigen Art, die von dem Fahrzeug geladen und sachgerecht transportiert werden kann, zur Verfügung stehen, um alle Fahrzeuge auszulasten. Die Leerfahrten sind ökologisch und ökonomisch belastend.

Der Erfindung liegt die Aufgabe zu Grunde, einen kastenförmigen geschlossenen Aufbau für einen Lastkraftwagen oder einen Anhänger für Lastkraftwagen zu entwickeln, der seitlich bzw. von oben be- und entladen werden kann und, wenn er mit einem Kühlaggregat versehen ist, für Kühltransporte eingesetzt werden kann. Er soll für ein breites Spektrum von Ladegut geeignet, d. h. auch für Palettenware sowie für lange und/oder schwere Güter, und durch seine Be- und Entlademöglichkeiten vielseitig einsetzbar sein und damit die Anzahl von Leerfahrten verringern und dadurch Kosten einsparen. Ferner sollte er den vorgeschriebenen Hygienebestimmungen für Lebensmitteltransporte, ausgenommen denen für offenes, hängendes Fleisch, entsprechen können.

Diese Aufgabe wird hinsichtlich der seitlichen Be- und Entladung erfindungsgemäß durch einen Aufbau mit den Merkmalen des beigefügten Anspruchs 1 gelöst. Hinsichtlich der Be- und Entladung von oben wird diese Aufgabe durch einen Aufbau mit den Merkmalen des beigefügten Anspruchs 2 gelöst. Eine bevorzugte Ausführungsform umfaßt die Merkmale der Ansprüche 1 und 2.

Bevorzugte Ausgestaltung und Weiterbildung der Erfindung ergeben sich aus den jeweiligen abhängigen Patentansprüchen und der nachfolgenden Beschreibung mit zugehörigen Zeichnungen.

Der erfindungsgemäße kastenförmige, geschlossene Aufbau für einen Lastkraftwagen oder einen Anhänger für Lastkraftwagen, insbesondere einen Trailer, umfaßt also einen Boden, eine linke und eine rechte Seitenwand, ein Dach, eine Vorwand und eine Rückwand, die vorzugsweise wärmeisoliert sind, und weist die Besonderheiten auf, daß mindestens eine Seitenwand in Längsrichtung des Aufbaus verschiebbare, zusammenfaltbare Türen aufweist, mit denen die Seitenwand öffenbar ist, die mindestens eine, mit öffenbaren Türen versehene Seitenwand mindestens eine verschiebbare Runge aufweist, mit der das Dach gegenüber dem Boden abgestützt ist, und die Türen und die Runge in einer Dachprofilschiene in Längsrichtung des Aufbaus verschiebbar verankert sind. Vorteilhafterweise sind jeweils die Türen zwischen der Vorderwand und der hierzu nächstliegenden Runge und die Türen zwischen der Rückwand und der hierzu nächstliegenden Runge und die Türen zwischen benachbarten Rungen aufeinander faltbar miteinander verbunden sind, so daß die Seitenwand von der Vorderwand bis zur Rückwand in vorteilhafter Art und Weise vollständig oder abschnittsweise öffenbar ist.

Die zusammengefalteten Türen sowie die Rungen können zur Vorderwand oder zur Rückwand des Aufbaues verschoben werden, so daß die Seitenwand abschnittsweise oder vollständig zur Vorderwand des Aufbaues oder zur Rückwand des Aufbaues hin geöffnet werden kann.

Die verschiebbaren Rungen zwischen Boden und Dach dienen als Stütze des Dachprofils und gewährleisten die Stabilität des Aufbaus. Das Dach oder die Dachprofilschiene weist vorzugsweise eine in Längsrichtung verlaufende Laufschiene für die Verankerung der Türen und/oder der Rungen auf. Die Dachprofilschiene ist vorzugsweise an der Unterseite und/oder an der zum Laderaum weisenden Innenseite als Laufschiene für die Verankerung der Türen und/oder Rungen ausgebildet. In einer solchen Laufschiene können auch die Verankerungen der Rungen geführt werden. Bevorzugt ist ferner die Dachprofilschiene an ihrer Oberseite als Laufschiene für die Dachelemente ausgebildet.

Ein zweiter erfindungsgemäßer kastenförmiger, geschlossener Aufbau für einen Lastkraftwagen oder einen Anhänger für Lastkraftwagen, weist die Besonderheit auf, daß das Dach in Längsrichtung aufeinanderfolgende Dachelemente aufweist, die in Längsrichtung des Aufbaus gegeneinander faltbar sind und/oder in einer in Längsrichtung verlaufenden Dachprofilschiene verschiebbar geführt sind.

Die Dachprofilschiene kann einen Umluftkanal aufweisen, wobei vorzugsweise an der Unterseite oder Innenseite der Dachprofilschiene Öffnungen für den Umluftkanal angebracht werden können. Durch diesen Umluftkanal wird die Kaltluft in den Innenraum des Aufbaus transportiert bzw. die Abluft abgeführt. Durch eine entsprechende Konstruktion des Umluftkanals können auch verschiedene Zonen des Innenraums auf unterschiedliche Temperaturen gekühlt werden.

Die Dachprofilschiene weist an der Unterseite vorzugsweise Aussparungen zum Verankern der Rungen auf. Die Rungen können an der Unterseite keilförmig ausgebildet sein, um in entsprechende Aussparungen im Boden des Aufbaues eingeschoben zu werden.

An der Ober- und/oder Unterseite können die Rungen einen konischen Fixierungsbolzen aufweisen, der in entsprechende Aussparungen vom Boden- bzw. Dachprofil eingerastet werden kann.

Die Vorrichtung, mittels der die Rungen oder die Türen in die Dachprofilschiene verschoben werden kann, umfaßt vorzugsweise Laufrollen. Um ein problemloses von Rungen und Türen zu gewährleisten, sind bevorzugt jeweils zwei Laufrollen vorgesehen.

Die Aufhängevorrichtung zum Verschieben der Türen sowie die der Rungen kann als T-Stück ausgebildet sein, an dem mittels eines Kugellagers ein schwenkbares Türband angebracht ist. Das Türband selbst ist vorzugsweise mit einem Kreuzgelenk versehen. Der Boden und/oder die Dachprofilschiene kann mit einer Fixierungsvorrichtung zum Fixieren der Türen versehen werden. Die Konstruktion der Aufhängung von Rungen und Türen ermöglicht nach Lösung der Türen bzw.

Rungen aus ihren Fixierungen ein problemloses Verschieben in die gewünschte Richtung. Die Aufhängevorrichtung kann auch zwei übereinander angeordnete Gelenke oder ein zusätzliches Gelenk oder ein sogenanntes "Gelenk für Schwingbewegungen umfassen".

Die Türen und/oder die Dachelemente bestehen aus selbsttragenden Isolierplatten oder zur Gewichtersparnis, vorzugsweise aus einer Rahmenkonstruktion. Diese Rahmenkonstruktion kann z. B. aus einem Hohlprofil, insbesondere einem Aluminiumhohlprofil bestehen, was zur Gewichtsersparnis beiträgt. Um der Rahmenkonstruktion Stabilität zu verleihen, kann sie Querstreben aufweisen. Der Türrahmen kann zur Isolation mit einer gewichtsparenden Folie oder mit mehreren Folien bespannt werden. Die Hohlräume der Türen und/oder Dachelemente werden vorzugsweise mit Isoliermaterial ausgefüllt, um eine ausreichende Wärmedämmung zu gewährleisten. Die Dachelemente können, entsprechend zu den Türen, auch aus einer Rahmenkonstruktion bestehen, insbesondere einem Hohlprofil, bevorzugt einem Aluminiumhohlprofil. Diese Rahmenkonstruktion kann ebenfalls mit einer oder mit mehreren Folien bespannt sein, und es kann vorgesehen sein, daß Hohlräume in den Dachelementen mit Isoliermaterial ausgefüllt sind.

Überraschender Weise hat sich im Rahmen der Erfindung herausgestellt, daß eine mit Folie bespannte Rahmenkonstruktion, die gleichermaßen für die Türen, die Rückwand oder das Dach verwendet werden kann, die Erfordernisse eines wärmeisolierten Aufbaus erfüllt. Im Rahmen der Erfindung wurde ferner gefunden, daß Polyurethanfolien, also Folien, die aus Polyurethan bestehen oder auf einer Polyurethanbasis hergestellt sind, bevorzugt gegenüber den im konventionellen Planenaufbau verwendeten PVC-Planen sind. Sie haben den Vorteil, daß sie hitzebeständig, lebensmitteltauglich, wetterbeständig, isolierend und abriebfest sind.

Ein weiteres vorteilhaftes Merkmal kann darin bestehen, daß die miteinander verbundenen, gegeneinander zusammenfaltbaren Türen, insbesondere jeweils die Türen zwischen der Vorderwand und der hierzu nächstliegenden Runge und die Türen zwischen der Rückwand und der hierzu nächstliegenden Runge und die Türen zwischen benachbarten Rungen, mit seitlich an den Türen angebrachten Scharnieren miteinander verbunden sind. In einer bevorzugten Ausführungsform sind die Scharniere Gummischarniere. Es können aber auch Scharnierverbindungen mit anders gestalteten Dichtelementen verwendet werden.

Das faltbare Dach eines erfindungsgemäßen kastenförmigen geschlossenen Aufbaus ist vorzugsweise in aufeinanderfolgenden, gegeneinander faltbaren Isolierplatten unterteilt. Es ist bevorzugt, wenn das Dach von der Vorderwand bis zur Rückwand in aufeinanderfolgenden, gegeneinander falbare oder verschiebbare Dachelemente unterteilt ist, damit das Dach über seine gesamte Länge zum Verladen langer Güter geöffnet werden kann. Vorzugsweise bestehen die Dachelemente aus selbsttragenden Isolierplatten.

In einer bevorzugten Ausführungsform umfassen die Dachelemente sowohl Faltelemente, die in Längsrichtung des Aufbaus gegeneinander faltbar sind, als auch in der Dachebene liegende Schiebeelemente, die in Längsrichtung des Aufbaus verschiebbar geführt sind. Dabei ist in einer bevorzugten Ausführungsform vorgesehen, daß zwischen jeweils zwei aufeinanderfolgenden, nach oben faltbaren Faltelementen ein Schiebeelement angeordnet ist.

Die Schiebeelemente umfassen in einer vorteilhaften Ausführungsform am linken und rechten Rand Laufrollen, die in der Dachprofilschiene geführt werden. Aneinandergrenzende Dachelemente können mit Scharnieren, vorzugsweise Gummischarnieren verbunden sein. Diese Scharniere sind vorzugsweise abwechselnd an der Oberseite und der Unterseite der Dachelemente angebracht. Die Dachelemente können an der Seit zum jeweils benachbarten Dachelement abgeschrägt sein, um eine bessere Faltbarkeit zu gewährleisten oder eine erhöhte Dichtigkeit zu erzielen.

Zwischen benachbarten Dachelementen sind vorzugsweise Dichtungen angebracht. Dachelemente, insbesondere solche, die nicht aufgefaltet werden können, können an der Unterseite am linken und rechten Rand Laufrollen aufweisen, die in der Dachprofilschiene oder in einer Laufschiene geführt werden. Damit wird die Stabilität des Daches in jedem Öffnungszustand gewährleistet.

Sämtliche Dachelemente können am linken und rechten Rand mit einem Dichtungsprofil abgedichtet sein, um das Eindringen von Schmutz und Feuchtigkeit zu vermeiden und die Isolierfähigkeit zu erhöhen. Das Dichtungsprofil ist beispielsweise an der Unterseite der Dachelemente oder an der zugehörigen Laufschiene oder der Dachprofilschiene angebracht. Um eine feste Verankerung der Dachelemente im geschlossenen Zustand des Daches zu gewährleisten, können an ihrer Unterseite Verschlußhaken angebracht sein, die in die Dachprofilschiene eingreifen können.

Bei einem erfindungsgemäßen Aufbau kann vorzugsweise das Dach durch Verschieben von Dachelementen von der Rückwand zur Vorderwand und oder von der Vorderwand zur Rückwand geöffnet werden. Damit ist das Be- und Entladen eines solchen Aufbau wesentlich vielseitiger und zweckmäßiger möglich als bei Aufbauten nach dem Stand der Technik, bei denen das Dach nur von der Rückwand zur Vorwand hin geöffnet werden kann.

Gemäß einem weiteren vorteilhaften Merkmal kann vorgesehen sein, daß das Dach mindestens eine Verschlußeinrichtung umfaßt, mit der zwei benachbarte Dachelemente miteinander verbindbar sind, und das Dach bei geöffneter Verschlußeinrichtung durch verschieben von Dachelementen zur Vorwand als auch zur Rückwand öffenbar ist. Das Dach kann also durch Öffnen der Verschlußeinrichtung in getrennt verschiebbare Teile aufgeteilt werden. Dadurch kann das Dach an der gewünschten Stelle geöffnet und die Lademöglichkeit des Laderaums weiter verbessert werden.

Nach einem vorteilhaften Merkmal wird ferner vorgeschlagen, daß das Dach im wesentlichen über die gesamte Länge des Aufbaus öffenbar ist. Dadurch kann das Dach in vorteilhafter Weise zu Be- Entladen langer Güter von oben geöffnet werden.

Ein erfindungsgemäß ausgestalteter Aufbau weist den Vorteil auf, daß er in vielfältiger Weise be- und entladen werden kann, insbesondere mit langen und/oder schweren Gütern oder aber auch nur in vereinfachter Weise in einem gewünschten Abschnitt, ohne den gesamten Aufbau öffnen zu müssen. Besonders vorteilhaft ist es, wenn der Aufbau wärmeisoliert ist, da er dann noch vielseitiger eingesetzt werden kann und Leerfahrten noch besser vermieden werden können.

Die Erfindung wird nachfolgend anhand eines in den Figuren dargestellten Ausführungsbeispiels näher erläutert. Die darin beschriebenen Besonderheiten können einzeln oder in Kombination miteinander eingesetzt werden, um bevorzugte Ausgestaltungen der Erfindung zu schaffen.

Es zeigen
- Figur 1: ein Schema einer Seitenwand eines erfindungsgemäßen Aufbaus;
- Figur 2: eine perspektivische Seitenansicht einer Dachprofilschiene vom Innenraum eines Aufbaus her gesehen;
- Figur 3: eine Unterseite einer Dachprofilschiene;
- Figur 4: einen Querschnitt einer Dachprofilschiene;
- Figur 5: eine Seitenansicht einer Runge mit Verankerung in der Dachprofilschiene und Halterung zum Aufnehmen der keilförmigen Unterseite am Boden des Aufbaus;
- Figur 6: eine Ansicht der Runge von der Außenseite des Aufbaus;
- Figur 7: eine Halterung für Rungen und Türen in der Dachprofilschiene;
- Figur 8: die Halterung von Figur 7 mit Kreuzgelenk;
- Figur 9: ein Verbindungsteil zwischen Halterung und Türen bzw. Rungen in geschlossener Stellung;
- Figur 10: das Verbindungsteil von Figur 9 in leicht geöffneter Stellung;
- Figur 11: eine schematische Aufsicht einer aufgefalteten Türeinheit bestehend aus drei Türen;
- Figur 12: eine Innenansicht einer Einzeltür;
- Figur 13: eine Außenansicht einer Einzeltür;
- Figur 14: eine Aufsicht auf ein faltbares Dach;
- Figur 15: eine schematische Seitenansicht eines Abschnittes eines faltbaren Daches in geschlossener Stellung;
- Figur 16: eine schematische Seitenansicht eines Abschnittes eines faltbaren Daches in teilweise geöffneter Stellung;
und
- Figur 17: einen Querschnitt durch ein verschiebbares Dachelement.

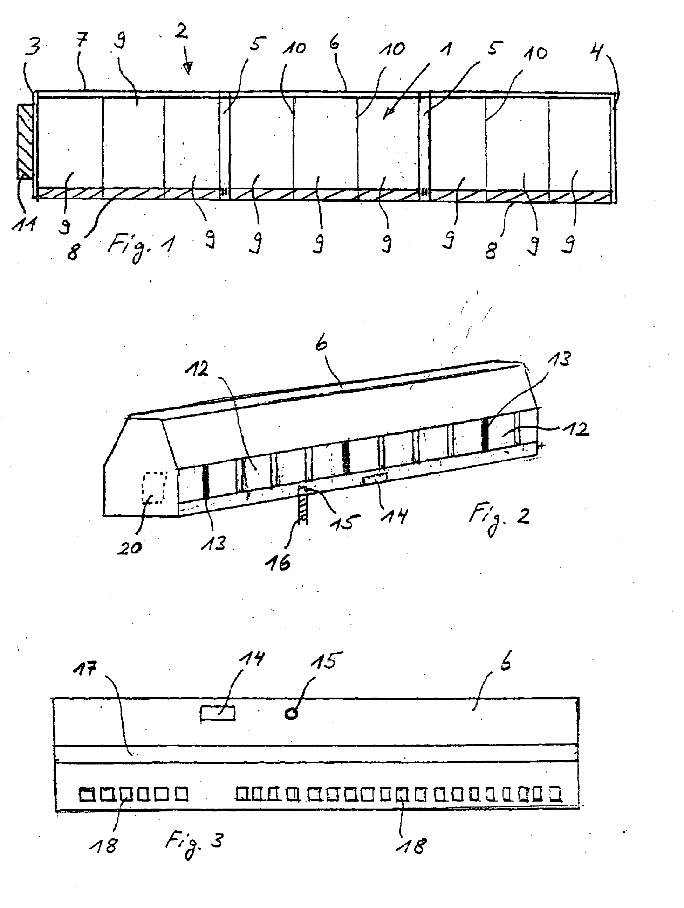

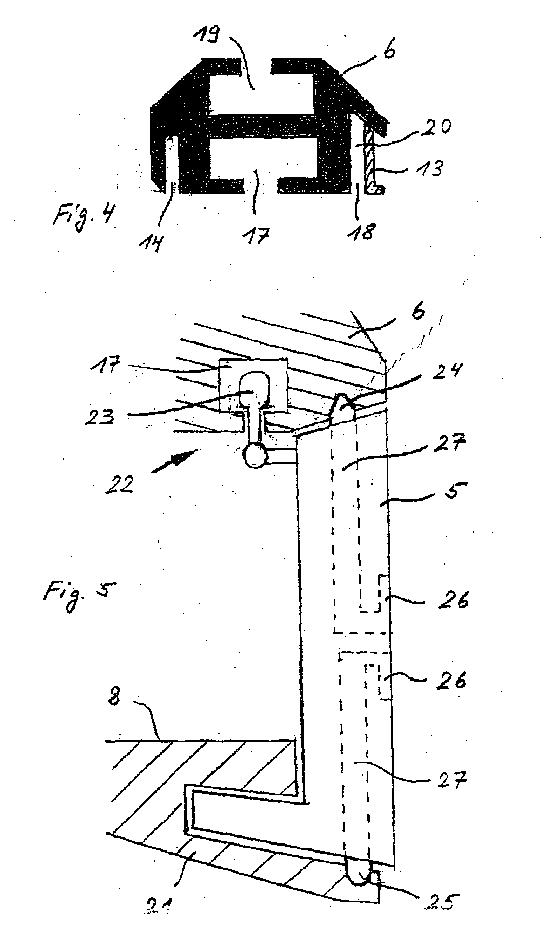

Die Figur 1 zeigt schematisch die Seitenwand 1 eines erfindungsgemäßen LKW-Aufbaus 2. Zwischen Vorderwand 3 und Rückwand 4 ist die Seitenwand 1 durch zwei Rungen 5 in drei Abschnitte geteilt. Die Rungen 5 sind in Längsrichtung des Aufbaus 2 verschiebbar in einer Dachprofilschiene 6 des Daches 7 verankert und können im Aufbauboden 8 verankert werden. Die Abschnitte zwischen den Rungen 5 bzw. zwischen einer Runge 5 und Vorderwand 3 oder Rückwand 4 sind mit faltbaren Türen 9 versehen, die in der Profilschiene 6 verschiebbar verankert sind. Jeweils drei Türen 9 sind zusammenhängend durch Scharniere 10 miteinander verbunden. Die Rungen 4 dienen der Stabilität des Aufbaus 2, indem sie die Profilschiene 6 gegen den Boden 8 abstützen unterstützen. Die Rungen 4 bilden somit mit den Türen 9 in vorteilhafter Art und Weise die Seitenwand des beschriebenen LKW-Aufbaus 2 aus.

In den Ecken des Rahmenaufbaus 2 sind vorteilhafterweise gebräuchliche Winkelverstärkungen angebracht. In der Rückwand 4 können gebräuchliche Türen angebracht sein.

Bei dem in Figur 1 dargestellten Aufbau 2 sind die Türen 9 geschlossen. Zum Öffnen werden sie entriegelt und können dann entlang der Dachprofilschiene 6 geführt in Längsrichtung des Aufbaus 2 verschoben werden, wobei jeweils die Türen eines Abschnittes zusammengefaltet werden können. Auf diese Weise kann der Aufbau 2 abschnittsweise oder in seiner gesamten Längsrichtung durch Öffnen der Türen 9 geöffnet werden. Da auch die Rungen 5, wenn sie entriegelt sind, in Längsrichtung des Aufbaus 2 verschoben werden können, kann eine hindernisfreie Be- und Entladung des Aufbaus 2 von der Seite her erfolgen.

An der Vorderwand 3 ist ein Kühlaggregat 11 angebracht. Die Türen 9 haben keine tragende Funktion für das Dach 7 und bestehen beispielsweise aus einer Rahmenkonstruktion, die mit Folie bespannt sein kann, oder aus im Fahrzeugbau bekannten Isolierplatten.

Die Türen 9 reichen in der dargestellten Ausführungsform des Aufbaus 2 vom Boden 8 bis zum Dach 7, so daß durch Öffnen der Türen 9 die gesamte Höhe des Laderaums frei zugänglich wird. In anderen Ausführungsformen können die Türen 9 aber auch eine geringere Höhe aufweisen, so daß entlang des Bodens 8 und/oder des Daches 7 eine nicht offenbare Querverblendung des Laderaums verbleibt.

Die Rungen 5 sind vorteilhafterweise in Form von H-Trägern ausgebildet und weisen bevorzugt eine in Querrichtung des Aufbaus 2 gemessene Breite von maximal 3,5 cm auf, damit bei der für Kühlfahrzeuge geforderten Ladefläche von mindestens 1.350 cm Länge und 248 cm Breite die für Fahrzeuge maximal erlaubte Gesamtbreite von 255 cm nicht überschritten wird.

Die Rungen 5 können aber auch herkömmliche, bekannte Rungen sein. Es sind Rungen bekannt, die tragende Eigenschaften besitzen, sogenannte "Klapprungen". Diese können auch Rollen zum Verschieben aufweisen. Vorteilhafte Merkmale für die verwendeten Rungen sind die genaue Fixierung, ein exakter Fixierungspunkt sowohl oben in der Dachprofilschiene 6 als auch unten im Boden 8, eine Verschluß- bzw. Fixierungsmöglichkeit und die tragende Eigenschaft zum Abstützen des Daches 7.

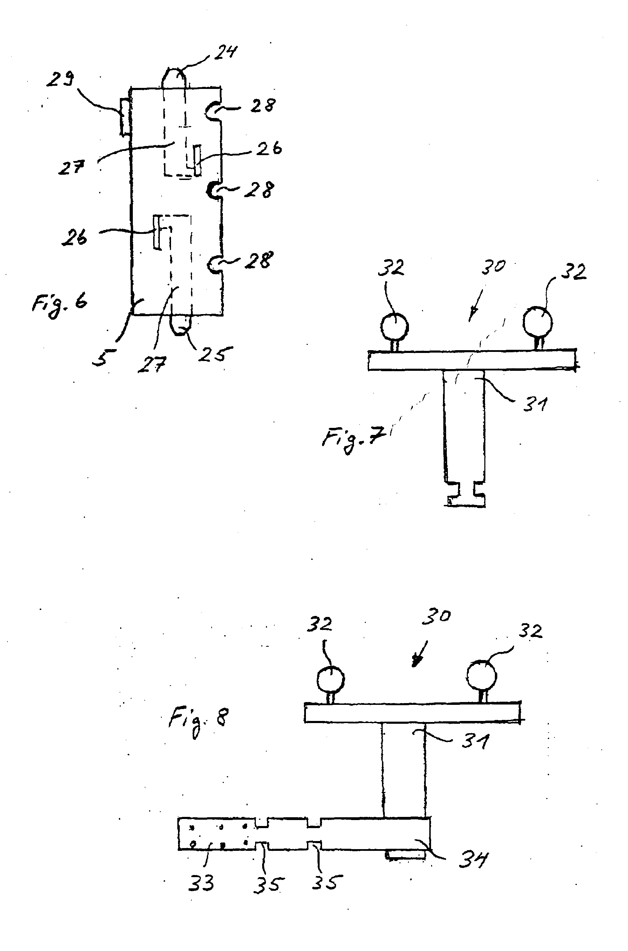

Die Figur 2 zeigt eine perspektivische Seitenansicht einer Dachprofilschiene 6 vom Innenraum des LKW-Aufbaues 2 her gesehen. Der obere trapezförmige Aufbau der Dachprofilschiene 6 ist als Laufschiene für Dachelemente ausgebildet. In der Dachprofilschiene 6 verlaufen eine Laufschiene für die Türen 9 und ein Umluftkanal 20. Die Einspeisung der Umluft in den Umluftkanal 20 erfolgt von dem Kühlaggregat 11. Der Umluftkanal 20 weist zur Innenseite des Aufbaues gerichtete Öffnung 12 auf. In regelmäßigen Abständen sind nach innen versetzte, verstärkte Stege 13 angeordnet, um die Halterung der Exzenterverschlüsse der Dachelemente aufnehmen und arretieren zu können.

An der Unterseite der Dachprofilschiene 6 befinden sich Einschnitte 14 zum Fixieren der Rungen 5 und Einschnitte 15 zum Einführen eines Fixierungszapfens 16 an einem Stab für die Türverriegelung. Die Einschnitte 14 und 15 können auch durch funktionell gleichwirkende Fixierungszapfen ersetzt werden, um die Türen 9 und die Rungen 5 zu fixieren.

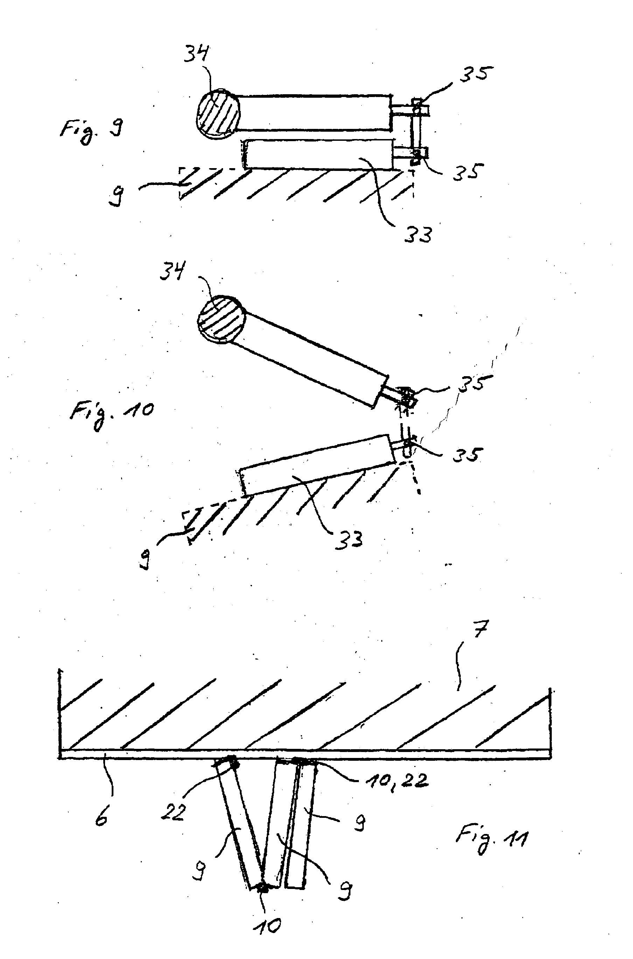

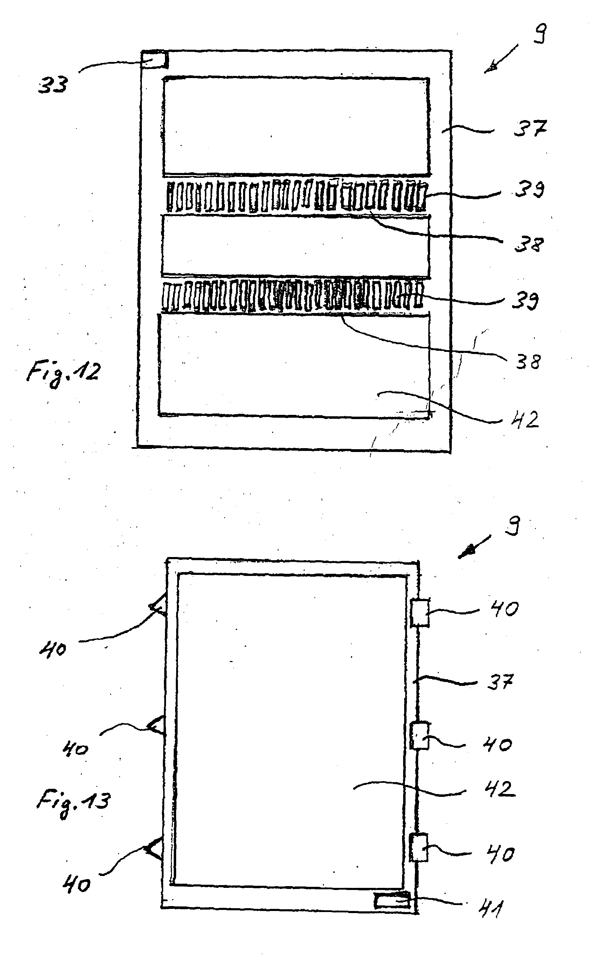

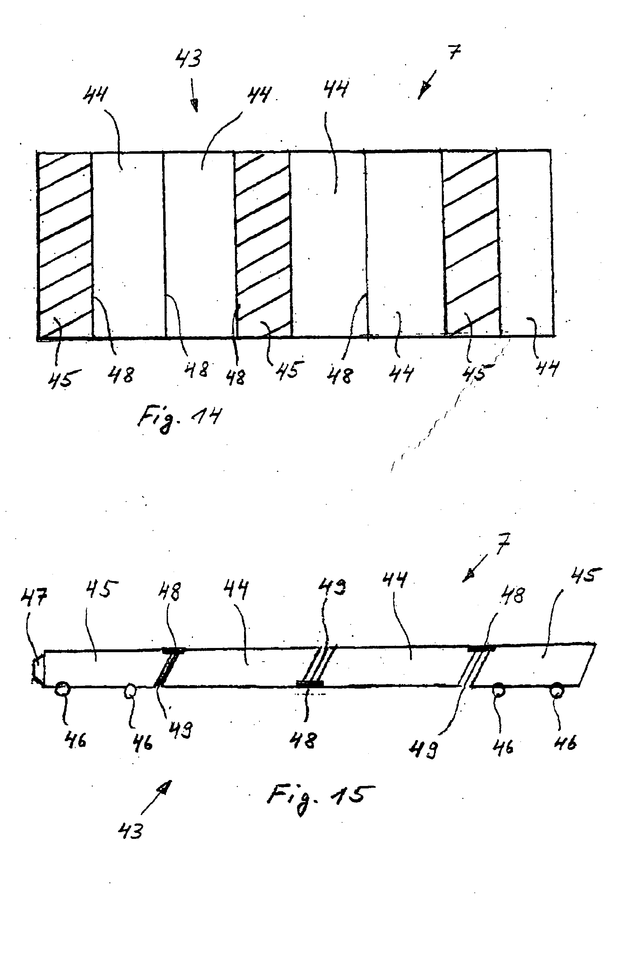

Die Figur 3 zeigt eine Ansicht der Unterseite einer Dachprofilschiene 6. In der Mitte der Unterseite verläuft die Öffnung der Laufschiene 17 für Türen 9 und Rungen 5. In der Hälfte, die zum Innenraum des Aufbaus 2 gerichtet ist, sind Öffnungen 18 zum Umluftkanal 20 angebracht. In der außen liegenden Hälfte der Dachprofilschiene 6 ist ein Einschnitt 14 zum Fixieren der Rungen 5 angebracht.

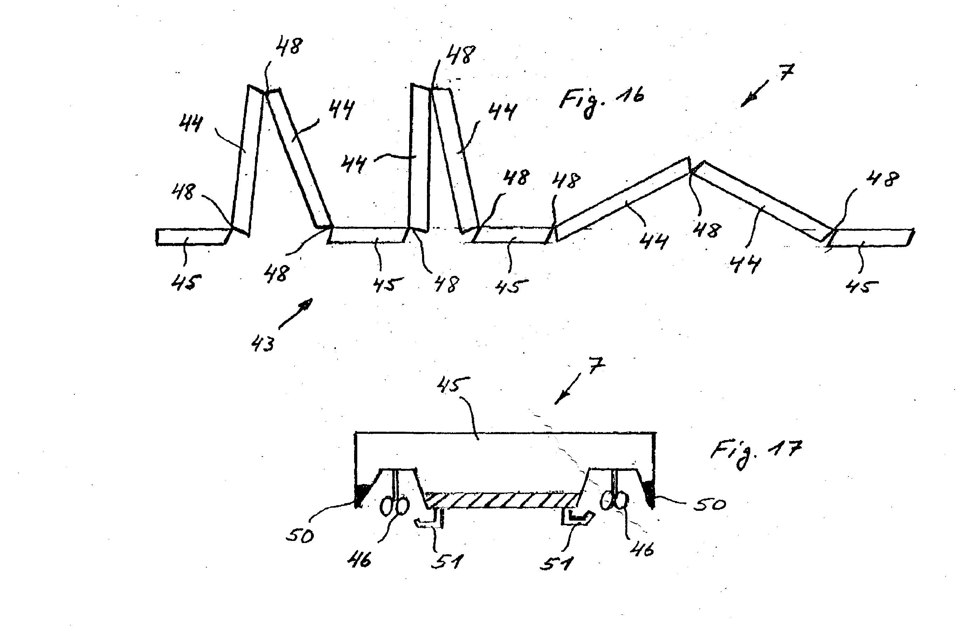

Die Figur 4 zeigt einen Querschnitt der Dachprofilschiene 6. Der obere trapezförmige Teil ist als Laufschiene 19 für Dachelemente ausgebildet. Der untere Teil der Dachprofilschiene 6 ist mittig als Laufschiene 17 für die Türen 9 und Rungen 5 ausgebildet. Zur Außenseite hin weist die Dachprofilschiene 6 einen Einschnitt 14 zum Fixieren einer Runge 5 auf. Zur Innenseite weist die Dachprofilschiene 6 einen Umluftkanal 20 für das Kühlsystem des LKW-Aufbaues 2 auf.

Durch die Anschrägung an der Oberseite der Dachprofilschiene 6 wird ein leichte Schließen des Daches 7 ermöglicht. Die Dachelemente "fallen" in ihre vorgesehene Plazierung und verkannten nicht. Dies ist vorteilhaft, da Ladeplätze und Straßenuntergründe im allgemeinen nicht eben oder waagrecht ausgerichtet sind.

Die Figur 5 zeigt die Seitenansicht einer Runge 5, die in der Dachprofilschiene 6 und in einer Halterung 21 des Bodens 8 verankert ist. Der keilförmige Unterteil der Runge 5 wird von der Halterung 21 des Bodens 8 aufgenommen. Die an der Oberseite der Runge 5 angeordnete Aufhängevorrichtung 22 weist Laufrollen 23 auf, die in der Laufschiene 17 an der Unterseite der Dachprofilschiene 6 geführt werden. Die Runge 5 wird durch konisch zulaufende Zapfen 24, 25 in der Halterung 21 bzw. in der Dachprofilschiene 6 fixiert. Die Zapfen 24, 25 werden durch Handgriffe 26 und ein Gestänge 27 betätigt.

Aufgrund der konischen Halterung "fällt" die Runge 5 etwas nach unten und nach außen weg vom Aufbau 2 und bleibt über die oben angebrachte Rollenaufhängung in der Dachprofilschiene 6 gefangen. Dadurch kann die Runge 5 nach belieben nach links oder rechts , d.h. in Längsrichtung des Aufbaus 2 verschoben werden.

Die Figur 6 zeigt die Außenansicht einer Runge 5. An der Ober- und Unterseite sind konisch zulaufende Zapfen 24, 25 angebracht, die durch Handgriffe,26 verschoben und damit in die Öffnung 14 in der Dachprofilschiene 6 und der Halterung 21 am Boden 8 eingelassen und somit grundsätzlich an ihrem vorgesehenen Verankerungspunkt angebracht werden können. Die Runge 5 kann aus Sicherheitsgründen seitliche Einschnitte 28 für Fixierungsbolzen zu einer benachbarten Tür 9 aufweisen. Der Ansatz 29 wirkt mit der Aufhängevorrichtung 20 zusammen.

Die Figur 7 zeigt eine verschiebbare Vorrichtung 30 zum Verankern von Türen 9 und Rungen 5 in der Dachprofilschiene 6. Sie umfaßt ein T-Stück 31, dessen Querstück mit zwei Laufrollen 32 versehen ist. Dadurch, daß jeweils zwei Laufrollen 32 pro Runge 5 oder Tür 9 verwendet werden, wird ein leichtes Verschieben erzielt und einem Verankern entgegengewirkt. Das mittige an den Querstreben angebrachte Längsstück ist an seinem Ende eingekerbt, so daß es ein Kugellager aufnehmen kann, das mit einem Türband versehen ist, das zur Befestigung an einer Runge 5 oder einer Tür 9 dient.

In Figur 8 ist die Vorrichtung 30 von Figur 7 mit einem Türband 33 dargestellt. Das Türband 33 ist mit einem Kugellager 34 an dem Längsstück drehbar fixiert und wird mit dem anderen Ende mit einer Tür 9 verbunden. Es weist ferner zwei Kreuzgelenke 35 auf, durch die es in sich zusammenfaltbar ist.

Die Figur 9 zeigt ein Türband 33, das aus zwei mit einem Kreuzgelenk 35 miteinander verbundenen Bandabschnitten besteht. Der erste Bandabschnitt dient zum Befestigen der Tür 9. Der zweite Bandabschnitt ist an seinem Ende derart ausgebildet, daß er ein Kugellager 34 aufnehmen kann, das eine drehbare Verbindung des Türbandes 33 mit dem Längsteil des T-Stücks 31 der verschiebbaren Vorrichtung 30 ermöglicht. In Figur 10 ist das Türband 33 in leicht geöffneter Stellung der Tür 9 dargestellt. Anstelle der nebeneinander angeordneten Kreuzgelenke 35 kann auch eine platzsparende Gelenkverbindung mit übereinander angeordneten Gelenken vorgesehen sein.

Die Figur 11 zeigt eine faltbare und verschiebbare Türeinheit aus drei Türen 9, die mit Scharnieren 10 miteinander verbunden sind. Als Scharniere 10 werden vorzugsweise Gummischarniere verwendet, die eine durchgehende Abdichtung gewährleisten. Alternativ können Scharniere mit einer zusätzlichen Dichtung verwendet werden. Die Türen 9 sind in geöffneter, nicht ganz zusammengeklappter bzw. zusammengefalteter Stellung dargestellt. Die Einheit aus drei Türen 9 kann entlang der Dachprofilschiene 6 in Längsrichtung des Aufbaus verschoben werden.

Die Figur 12 zeigt die Innenansicht des Rahmens 37 einer Tür 9, vorzugsweise aus einem Aluminium-Hohlprofil. Ein Hohlprofil aus Aluminium verbindet eine erwünschte Festigkeit und Steifigkeit mit geringem Gewicht. Am linken oberen Rand ist ein Türband 33 befestigt. Zur Erhöhung der Stabilität dienen zwei Querstreben 38, die mit Öffnungen 39 versehen sind. Die Öffnungen 39 dienen zum Einhängen gebräuchlicher Querstangen, mit denen das Ladegut gesichert oder der Laderaum unterteilt werden kann. Die Tür 9 ist mit einer Folie 42 bespannt, die in dem Rahmen 37 gefaßt ist. Im Rahmen können auch durchgehende Verstärkungen vorgesehen sein., so daß im geschlossenen Zustand von vorne bis hinten eine durchgehende, zusammengesetzte, der Ladungssicherung dienende Einheit entsteht.

Die Figur 13 zeigt die Außenansicht einer Tür 9. An der linken Seite sind Fixierungsbolzen 40 angebracht, die in die Einschnitte 28 der Runge 5 eingreifen können. An der rechten Seite sind Scharniere 36 angebracht. Rechts unten am Rahmen 37 ist ein Handgriff 41 angebracht, mit dem mittels einer im rechten Türrahmen verlaufenden Stange die Türverriegelung betätigt werden kann. Die Scharniere können vorzugsweise mit einem Gummiprofil versehen oder durch ein Gummischarnier ersetzt werden.

Die optional vorgesehenen Verbindungsbolzen zwischen Türen 9 oder Rungen 5 dienen dazu, daß beim Öffnen und insbesondere beim Schließen die Türen 9 bzw. Rungen 5 an ihrem vorgesehenen Platz verankert werden und, beispielsweise in unebenem Gelände, keine unrichtigen Verankerungen gebildet werden.

In Figur 14 ist eine schematische Aufsicht auf einen Abschnitt eines erfindungsgemäß faltbaren Daches 7 dargestellt. Es umfaßt zwei Typen von in Längsrichtung des Aufbaus verschiebbaren Dachelementen 43, nämlich Faltelemente 44, die in Längsrichtung des Aufbaus gegeneinander faltbar sind, und in der Dachebene liegende Schiebeelemente 45, die in Längsrichtung des Aufbaus 2 verschiebbar geführt sind. Die Führung in Längsrichtung erfolgt vorzugsweise in der Dachprofilschiene 6.

Die Faltelemente 44 und/oder die Schiebeelemente 45 können verstärkt sein und die Funktion einer stabilisierenden Verstrebung übernehmen. Querverstrebungen in den Dachelementen 43 zwischen den beiden Seitenwänden des Aufbaus 2 sind bevorzugt an anderen Stellen als die fixierten Rungen 5 angeordnet. Dadurch wird der Aufbau 2 stabiler und das Windungsverhalten, das bei herkömmlichen Planenaufbauten einen Nachteil darstellte, wird erheblich verringert, so daß der Aufbau 2 auch bei Erschütterungen und Fahrtwind seine Form beibehält. Es können auch zusätzlich Kreuzverstärkungen in Faltelemente 44 eingearbeitet sein, um dadurch dem Verwinden des Aufbaus 2 entgegenzuwirken.

Die Figur 15 zeigt die schematische Seitenansicht bzw. einen schematischen Längsschnitt durch eine Gruppe von Dachelementen 43 bei geschlossenem Dach 7, umfassend Faltelemente 44 und Schiebeelemente 45. Die Schiebeelemente 45 sind mit Laufrollen 46 versehen. Ein Schiebeelement 44, das an der Vorderwand 3 oder Rückwand 4 des LKW-Aufbaues 2 anliegt, ist mit einer angeschrägten Fixierung 47 oder Drehverankerung versehen.

Die aufeinanderfolgenden Dachelemente 43 sind mit Scharnieren 48 verbunden, wobei die aneinander liegenden Dachelemente 44, 45 durch Dichtungen 49 abgedichtet sind. Die Trennflächen zwischen den Dachelementen 44, 45 sind leicht angeschrägt.

Das Scharnier 48 zweier aufeinanderfolgender auffaltbarer Faltelemente 44 ist an der Unterseite angebracht, das Scharnier 48 zwischen einem Faltelement 44 und einem Schiebeelement 45 ist an der Oberseite des Dachelements 43 angebracht. Somit können die Faltelemente 44 nach oben gefaltet werden, während die Schiebeelemente 45 in Richtung Vorderwand 3 oder Rückwand 4 des Aufbaus 2 verschoben werden. Die Dachelemente 43 können beispielsweise aus herkömmlichen Platten bzw. Isoliermaterial bestehen oder, entsprechend zu den oben beschriebenen Türen, in Form einer mit Folie bespannten Rahmenkonstruktion ausgebildet sein.

In Figur 16 ist eine schematische Seitenansicht eines Abschnittes eines faltbaren Daches 7 in teilweise geöffneter Stellung dargestellt. Das Dach 7 kann durch Verschieben der Dachelemente 43 sowohl von der Vorderwand als auch von der Rückwand des Aufbaus aus geöffnet werden. Die entsprechenden Drehverankerungen befinden sich in Querstreben und/oder Schiebeelemente 45 bzw., in speziellen Ausführungsformen, in Faltelementen 44. Die Querstreben oder Schiebeelemente 45 umfassen entsprechende Einrichtungen, um sie betätigen und verschieben zu können, beispielsweise Haken, die von einem auf der Straße oder dem Boden des Aufbaus stehenden Bediener mittels einer Greifstange verschoben werden können.

Die Figur 17 zeigt einen Querschnitt eines Schiebeelements 45. Es weist am linken und rechten unteren Rand trapezförmigen Einsparungen auf, die mit Laufrollen 46 versehen sind, die in der Laufschiene 19 der Dachprofilschiene 6 geführt werden. Das Schiebeelement 45 ist an der rechten und linken Unterkante mit einem Dichtungsprofil 50 versehen, um die Isolation zu erhöhen. An der verstärkten Unterseite ist zu den trapezförmigen Aussparungen hin jeweils ein schwenkbarer Verschlußhaken 51 befestigt, der in die nach innen versetzten Stege 13 der Dachprofilschiene 6 eingreifen kann und mit einer Vierkantstange betätigt wird.

### Bezugszeichenliste

- 1: Seitenwand
- 2: Aufbau
- 3: Vorderwand
- 4: Rückwand
- 5: Runge
- 6: Dachprofilschiene
- 7: Dach
- 8: Boden
- 9: Tür
- 10: Scharnier
- 11: Kühlaggregat
- 12: Seitliche Öffnung des Umluftkanals
- 13: Steg
- 14: Einschnitt zum Fixieren der Runge
- 15: Einschnitt für 16
- 16: Fixierungszapfen für Türverriegelung
- 17: Laufschiene für Türen und Rungen
- 18: untere Öffnung des Umluftkanals
- 19: Laufschiene für Dachelemente
- 20: Umluftkanal
- 21: Halterung am Aufbauboden
- 22: Aufhängevorrichtung
- 23: Laufrolle
- 24: oberer konisch zulaufender Fixierungszapfen für Runge
- 25: unterer konisch zulaufender Fixierungszapfen für Runge
- 26: Handgriff
- 27: Gestänge
- 28: Einschnitte für Fixierungsbolzen
- 29: Ansatz
- 30: Verschiebbare Vorrichtung
- 31: T-Stück
- 32: Laufrolle
- 33: Türband
- 34: Kugellager
- 35: Kreuzgelenk
- 36: Scharnier
- 37: Rahmen einer Tür
- 38: Querstrebe eines Türrahmens
- 39: Öffnungen der Querstreben
- 40: Fixierungsbolzen einer Tür
- 41: Handgriff für Türfixierung
- 42: Folie
- 43: Dachelement
- 44: Faltelement
- 45: Schiebeelement
- 46: Laufrolle für Schiebeelemente
- 47: Fixierung für Schiebeelemente
- 48: Scharnier für Dachelemente
- 49: Dichtung für Dachelemente
- 50: Dichtungsprofil zu 45
- 51: Verschlußhaken

## Patentansprüche

1. Kastenförmiger, geschlossener Aufbau (2) für einen Lastkraftwagen oder einen Anhänger für Lastkraftwagen, insbesondere für einen Trailer, umfassend einen Boden (8), eine linke und eine rechte Seitenwand (1), ein Dach (7), eine Vorderwand (3) und eine Rückwand (4), die vorzugsweise wärmeisoliert sind, wobei mindestens eine Seitenwand (1) in Längsrichtung des Aufbaus (2) verschiebbare, zusammenfaltbare Türen (9) aufweist, mit denen die Seitenwand (1) öffenbar ist, die mindestens eine, mit öffenbaren Türen (9) versehene Seitenwand (1) mindestens eine verschiebbare Runge (5) aufweist, mit der das Dach (7) gegenüber dem Boden (8) abgestützt ist, und die Türen (9) und die Runge (5) in einer Dachprofilschiene (6) in Längsrichtung des Aufbaus (2) verschiebbar verankert sind, **dadurch gekennzeichnet, daß** die Türen zwischen der Vorderwand (3) und der hierzu nächstliegenden Runge (5) und die Türen (9) zwischen der Rückwand (4) und der hierzu nächstliegenden Runge (5) und die Türen (9) zwischen benachbarten Rungen (5) aufeinander faltbar miteinander verbunden sind, so daß die Seitenwand (1) von der Vorderwand (3) bis zur Rückwand (4) vollständig oder abschnittsweise öffenbar ist.

2. Kastenförmiger, geschlossener Aufbau (2) für einen Lastkraftwagen oder einen Anhänger für Lastkraftwagen, insbesondere für einen Trailer, insbesondere nach Anspruch 1, umfassend einen Boden (8), eine linke und eine rechte Seitenwand (1), ein Dach (7), eine Vorderwand (3) und eine Rückwand (4), die vorzugsweise wärmeisoliert sind, **dadurch gekennzeichnet, daß** das Dach (7) in Längsrichtung aufeinanderfolgende Dachelemente (43) aufweist, die in Längsrichtung des Aufbaus (2) gegeneinander faltbar sind und/oder in einer in Längsrichtung verlaufenden Dachprofilschiene (6) verschiebbar geführt sind, und daß das Dach (7) durch Verschieben von Dachelementen (43) von der Rückwand (4) zur Vorderwand (3) und/oder von der Vorderwand (3) zur Rückwand (4) öffenbar ist.

3. Aufbau nach Anspruch 1 oder 2, **dadurch gekennzeichnet, daß** das Dach (7) oder die Dachprofilschiene (6) eine in Längsrichtung verlaufende Laufschiene (17) für die Verankerung der Türen (9) und/oder der Rungen (5) aufweist.

4. Aufbau nach einem der Ansprüche 1 bis 3, **dadurch gekennzeichnet, daß** die Dachprofilschiene (6) an der zum Laderaum weisenden Innenseite oder an der Unterseite als Laufschiene (17) für die Türen (9) und/oder der Rungen (5) ausgebildet ist.

5. Aufbau nach einem der Ansprüche 1 bis 4, **dadurch gekennzeichnet, daß** die Dachprofilschiene (6) einen Umluftkanal (20) aufweist.

6. Aufbau nach Anspruch 5, **dadurch gekennzeichnet, daß** die Dachprofilschiene (6) Öffnungen (12) für den Umluftkanal (20) aufweist, vorzugsweise an ihrer Unterseite oder Innenseite.

7. Aufbau nach einem der Ansprüche 1 bis 6, **dadurch gekennzeichnet, daß** die Rungen (5) an ihrer Unterseite keilförmig ausgebildet sind.

8. Aufbau nach einem der Ansprüche 1 bis 7, **dadurch gekennzeichnet, daß** der Boden (8) eine Halterung (21) zum Aufnehmen der Unterseite der Rungen (5) aufweist.

9. Aufbau nach einem der Ansprüche 1 bis 8, **dadurch gekennzeichnet, daß** die Rungen (5) an ihrer Ober- und/oder Unterseite einen konischen Fixierungsbolzen (24,25) aufweisen.

10. Aufbau nach einem der Ansprüche 1 bis 9, **dadurch gekennzeichnet, daß** die Aufhängung der Rungen (5) oder der Türen (9) eine Aufhängevorrichtung (30) mit mindestens einer, vorzugsweise zwei Laufrollen (32) umfaßt.

11. Aufbau nach Anspruch 10, **dadurch gekennzeichnet, daß** die Aufhängevorrichtung (30) ein T-Stück und ein mittels eines Kugellagers (34) mit diesem verbundenes schwenkbares Türband (33) umfaßt.

12. Aufbau nach Anspruch 11, **dadurch gekennzeichnet, daß** das Türband (33) ein Kreuzgelenk (35) oder zwei übereinander angeordnete Gelenke aufweist.

13. Aufbau nach einem der vorhergehenden Ansprüche, **dadurch gekennzeichnet, daß** der Boden (8) und/oder die Dachprofilschiene (6) eine Fixierungsvorrichtung zum Fixieren der Türen (9) aufweist.

14. Aufbau nach einem der vorhergehenden Ansprüche, **dadurch gekennzeichnet, daß** mindestens eine Türe (9) und/oder mindestens ein Dachelement (42) aus selbsttragenden Isolierplatten bestehen.

15. Aufbau nach einem der vorhergehenden Ansprüche, **dadurch gekennzeichnet, daß** mindestens eine Tür (9) und/oder mindestens ein Dachelement (42) aus einer Rahmenkonstruktion (37) bestehen.

16. Aufbau nach Anspruch 15, **dadurch gekennzeichnet, daß** die Rahmenkonstruktion (37) aus einem Hohlprofil, insbesondere einem Aluminiumhohlprofil besteht, die vorzugsweise Querstreben (38) umfaßt.

17. Aufbau nach einem der Ansprüche 1 bis 16, **dadurch gekennzeichnet, daß** mindestens eine Tür (9) und/oder mindestens ein Dachelement (43) mit einer Folie bespannt ist.

18. Aufbau nach Anspruch 17, **dadurch gekennzeichnet, daß** die Folie (42) eine Polyurethanfolie oder eine Folie auf Polyurethanbasis ist.

19. Aufbau nach einem der Ansprüche 15 bis 18, **dadurch gekennzeichnet, daß** die Hohlräume in den Türen (9) und/oder in den Dachelementen (43) mit Isoliermaterial ausgefüllt sind.

20. Aufbau nach einem der Ansprüche 1 bis 19, **dadurch gekennzeichnet, daß** die Dachelemente (43) sowohl Faltelemente (44), die in Längsrichtung des Aufbaus (2) gegeneinander faltbar sind, als auch in der Dachebene liegende Schiebeelemente (45), die in Längsrichtung des Aufbaus (2) verschiebbar geführt sind, umfassen.

21. Aufbau nach Anspruch 20, **dadurch gekennzeichnet, daß** zwischen jeweils zwei aufeinanderfolgenden, nach oben faltbaren Faltelementen (44) ein Schiebeelement angeordnet ist.

22. Aufbau nach Anspruch 20 oder 21, **dadurch gekennzeichnet, daß** die Schiebeelemente (45) am linken und rechten Rand Laufrollen (46) aufweisen, die in der Dachprofilschiene (6) geführt werden.

23. Aufbau nach einem der Ansprüche 1 bis 22, **dadurch gekennzeichnet, daß** aneinandergrenzende Dachelemente (43) mit Scharnieren (48), vorzugsweise Gummischarnieren. miteinander verbunden sind.

24. Aufbau nach Anspruch 23, **dadurch gekennzeichnet, daß** die Scharniere (48) abwechselnd an der Oberseite und Unterseite der Dachelemente (43) angebracht sind.

25. Aufbau nach einem der Ansprüche 1 bis 24, **dadurch gekennzeichnet, daß** die Dachelemente (43) an der Seite zum jeweils benachbarten Dachelement (43) abgeschrägt sind.

26. Aufbau nach einem der Ansprüche 1 bis 25, **dadurch gekennzeichnet, daß** zwischen benachbarten Dachelementen (43) eine Dichtung (49) angebracht ist.

27. Aufbau nach einem der Ansprüche 1 bis 26, **dadurch gekennzeichnet, daß** die Dachelemente (43) an der Unterseite Verschlußhaken (51) aufweisen, die in die Dachprofilschiene (6) eingreifen können.

28. Aufbau nach einem der Ansprüche 1 bis 27, **dadurch gekennzeichnet, daß** das Dach (7) mindestens eine Verschlußeinrichtung umfaßt, mit der zwei benachbarte Dachelemente (43) miteinander verbindbar sind, und das Dach (7) bei geöffneter Verschlußeinrichtung durch Verschieben von Dachelementen (43) zur Vorderwand (3) als auch zur Rückwand (4) öffenbar ist.

29. Aufbau nach einem der Ansprüche 1 bis 28, **dadurch gekennzeichnet, daß** das Dach (7) im wesentlichen über die gesamte Länge des Aufbaus (2) öffenbar ist.

30. Aufbau nach einem der Ansprüche 1 bis 29, **dadurch gekennzeichnet, daß** er wärmeisoliert ist.

31. Lastkraftwagen, Anhänger für einen Lastkraftwagen oder Trailer, **dadurch gekennzeichnet, daß** er einen Aufbau nach einem der Ansprüche 1 bis 30 aufweist.
